# EUROPEAN PATENT APPLICATION

(11) **EP 2 938 086 A1**
(43) Date of publication of application: **28.10.2015**
(21) Application number: 15164141.2
(22) Date of filing: 17.04.2015
(51) Int. Cl.: H04N 21/2343, G11B 27/00, H04L 29/06, H04N 21/2387, H04N 21/6587, H04N 21/845, H04N 21/472, G06F 3/0485

(54) **SERVICE DEVIDE AND CLIENT DEVICE FOR PROVIDING VOD SERVICE AND SERVICE PROVIDING METHODS THEREOF**

(30) Priority: 21.04.2014 KR 20140047327
(71) Applicant: Samsung Electronics Co., Ltd., Suwon-si, Gyeonggi-do (KR)
(72) Inventor: Park, Yoon-sik, Gyeonggi-do (KR); Kim, Soo-hyeon, Gyeonggi-do (KR)
(74) Representative: Taor, Simon Edward William

(57) **Abstract**

A method for providing video on demand (VoD) service of a client device is disclosed. The method includes requesting content from a server device in response to the content being selected, receiving first type data for sequential frames and second type data for non-sequential frames according to a playback time of the content from the server device, outputting the content using the first type data, and performing a skip operation for displaying a frame at a point of time corresponding to a skip command using the second type data in response to the skip command being input. The skip operation is rapidly performed.

## Description

Apparatuses and methods consistent with exemplary embodiments relate to a server device and a client device for providing VoD service, and service providing methods thereof.

With the development and spread of various electronic apparatuses, the kind and number of pieces of service or services providable using the electronic apparatuses are considerably increased.

There may be video on demand (VoD) service as one of the pieces of service or services. The VoD service means service in which users can selectively watch external content using their televisions (TVs) or other display devices. A VoD system which provides the VoD service may include a server device configured to provide content according to the user's request, and a client device configured to allow the user to watch the content through the TV or other display devices. In some cases, the VoD system may further include a middleware server configured to serve as a mediator between the server device and the client device.

To provide the VoD service, the client device provides information for content selected by the user to the server device, and downloads the corresponding content little by little from the server device, buffers the downloaded content, and plays back the buffered content.

In the conventional client device, standby time due to the buffering may be caused. In particular, in response to a skip function, which changes a point of playback time of the content, being selected by the user, the conventional client device discards the previously buffered data, and newly downloads the content from a jumped-to location. Therefore, while the new data is downloaded, buffered and processed, the user cannot watch the content and waits.

Additional aspects and/or advantages will be set forth in part in the description which follows and, in part, will be apparent from the description, or may be learned by practice of the invention.

One or more exemplary embodiments are to provide a server device and a client device which execute various functions using partial data, and VoD providing methods thereof.

According to an aspect of an exemplary embodiment, there is provided a method for providing video on demand (VoD) service of a client device. The method may include: requesting content to a server device in response to the content being selected; receiving first type data for sequential frames and second type data for non-sequential frames according to a playback time of the content from the server device; outputting the content using the first type data; and performing a skip operation for displaying a frame at a point of time corresponding to a skip command using the second type data in response to the skip command being input.

The second type data may include data for partial frames sampled in preset order among total frames of the content. The performing of the skip operation may include hopping to the frame at the point of time corresponding to the skip command among the partial frames and displaying the frame in response to the skip command being input.

The performing of the skip operation may include searching for the frame at the point of time corresponding to the skip command among the partial frames; requesting transmission for subsequent frames of the searched frame to the server device; and receiving the subsequent frames from the server device while the searched frame is output, and outputting the subsequent frames subsequent to the searched frame.

The performing of the skip operation may further include notifying the server device of information for a skip time unit. The partial frames may include a plurality of frame groups discontinuously sampled in a period of the skip time unit, and each of the frame groups may include a plurality of continuous frames.

The method may further include sequentially outputting next frames of a current frame among the partial frames in response to a fast forward command being input; and sequentially outputting previous frames of the current frame among the partial frames in reverse order in response to a rewind command being input.

The method may further include displaying a bar graph indicating degree of playback on an output screen of the content; and sequentially displaying preview images for the partial frames in one side of the bar graph in chronological order.

The client device and the server device may be coupled through a multisession, and the partial frames and the content may be received in parallel through the multisession.

The partial frames may be received in preset number units step by step according to degree of output processing of the content.

The partial frames may be frames converted in lower resolution than original frames of the content.

According to an aspect of an exemplary embodiment, there is provided a video on demand (VoD) client device. The VoD client device may include: a communication unit configured to perform communication with a server device; a controller configured to request content to the server device through the communication unit in response to the content being selected; a content processor configured to process the content and output the processed content in response to the content being received from the server device; and a storage unit configured to store partial frames sampled in preset order among total frames of the content in response to the partial frames being received from the server device. The controller may control the content processor to output a frame at a point of time corresponding to a skip command among the partial frames in response to the skip command being input.

The controller may search for the frame at the point of time corresponding to the skip command among the partial frames, request transmission for subsequent frames of the searched frame to the server device, and control the content processor to output the subsequent frames subsequent to the searched frame in response to the subsequent frames being received while the searched frame is output.

The controller may notify the server device of information for a preset skip time unit. The partial frames may be configured of a plurality of frame groups discontinuously sampled in a period of the skip time unit, and each of the frame groups may include a plurality of continuous frames.

The controller may control the content processor to sequentially output next frames of a current frame among the partial frames in response to a fast forward command being input, and to sequentially output previous frames of the current frame among the partial frames in reverse order in response to a rewind command being input.

The client device may further include a display unit configured to display an output screen of the content. The controller may display a bar graph indicating degree of playback on the output screen of the content, and sequentially display preview images for the partial frames in one side of the bar graph in chronological order.

The client device may further include an interface unit configured to transmit an output screen output from the content processor to an external display device. The controller may display a bar graph indicating degree of playback on the output screen of the content, and sequentially display preview images for the partial frames in one side of the bar graph in chronological order.

The communication unit may be coupled to the server device through a multisession. The partial frames and the content may be received in parallel through the multisession.

The partial frames may be received in preset number units step by step and stored in the storage unit, according to degree of output processing of the content.

The partial frames may be frames converted in lower resolution than original frames of the content.

According to an aspect of an exemplary embodiment, there is provided a method for providing service of a server device. The method may include: receiving transmission request of content from a video on demand (VoD) client device; transmitting partial frames sampled in preset order among total frames of the content to the VoD client device; and transmitting the content to the VoD client device.

The method may further include receiving information for a skip time unit from the VoD client device; detecting the partial frames by sampling the total frames of the content in the skip time unit; and converting the detected partial frames into frames having resolution lower than original resolution of the content.

According to an aspect of an exemplary embodiment, there is provided a server device. The server device may include: a content storage unit in which a plurality of pieces of content are stored; a communication unit configured to receive content transmission request from a video on demand (VoD) client device; and a server controller configured to transmit partial frames sampled in preset order among total frames of content selected by the content transmission request among the plurality of pieces of content, and the content to the VoD client device through the communication unit.

According to an aspect of an exemplary embodiment there is provided a video on demand service method that may include requesting, by a client device from a server, content comprising sequential frames and non-sequential frames, displaying, by the client device, the sequential frames, and skipping, by the client device, to display a skip-to-frame using the non-sequential frames in response to a skip command.

The sequential frames relative to the skip-to-frame may be displayed after the skip command is executed.

The skip command may include a skip time used for the skipping.

The non-sequential frames may include groups of frames sampled at the skip time.

The non-sequential frames may have a lower resolution than the sequential frames.

According to an aspect of an exemplary embodiment there is provided a non-transitory computer readable medium storing a video on demand service method that may include requesting, by a client device from a server, content comprising sequential frames and non-sequential frames, displaying, by the client device, the sequential frames and skipping, by the client device, to display a skip-to-frame using the non-sequential frames in response to a skip command.

According to the above-described various exemplary embodiments, the server device and the client device may provide a skip function or various functions such as fast forward or rewind using partial data of content.

Additional aspects and advantages of the exemplary embodiments will be set forth in the detailed description, will be obvious from the detailed description, or may be learned by practicing the exemplary embodiments.

The above and/or other aspects will be more apparent by describing in detail exemplary embodiments, with reference to the accompanying drawings, in which:
FIG. 1 is a view illustrating a configuration of a VoD system according to an exemplary embodiment;
FIG. 2 is a block diagram illustrating a configuration of a client device according to an exemplary embodiment;
FIG. 3 is a view illustrating an operation of a client device implemented with a set top box;
FIG. 4 is a view illustrating an operation of a client device implemented with a TV;
FIG. 5 is a view illustrating a configuration of partial frames;
FIGS. 6 and 7 are views illustrating a skip operation using partial frames;
FIG. 8 is a flow chart illustrating a method for providing VoD service of a client device according to an exemplary embodiment;
FIG. 9 is a flow chart illustrating a method for providing VoD service of a client device according to another exemplary embodiment;
FIG. 10 is a view illustrating a display operation according to the exemplary embodiment of FIG. 9;
FIGS. 11 to 13 are views illustrating methods for providing service of a client device according to other exemplary embodiments;
FIG. 14 is a block diagram illustrating a configuration of a server device according to an exemplary embodiment; and
FIG. 15 is a view illustrating an operation of a VoD system according to an exemplary embodiment.

Reference will now be made in detail to the embodiments, examples of which are illustrated in the accompanying drawings, wherein like reference numerals refer to the like elements throughout. The embodiments are described below to explain the present invention by referring to the figures.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

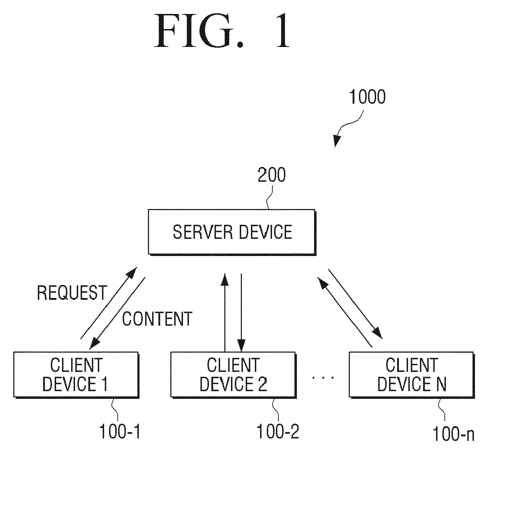

FIG. 1 is a view illustrating a configuration of a VoD system according to an exemplary embodiment. Referring to FIG. 1, a VoD system 1000 includes client devices 100-1 to 100-n, and a server device 200. The client devices 100-1 to 100-n are devices configured to request content transmission and play back the content provided according to the request. Specifically, the client devices 100-1 to 100-n may be implemented with a set top box having a processor therein, but the client devices 100-1 to 100-n are not limited thereto in embodiments of the invention. For example, the client device may be implemented with a digital TV having a set top box function therein. Further, the client device may be implemented with various types of devices, such as a personal computer (PC), a laptop PC, a portable phone, a tablet PC, or a kiosk.

The server device 200 is a device configured to provide various kinds or types of content according to a user's request. Specifically, the server device 200 may provide moving image content, but the content provided from the server device 200 is not limited thereto in embodiments of the invention. For example, the server device 200 may provide various pieces of data such as music content, still image content, or a data file.

The server device 200 and the client devices 100-1 to 100-n may be coupled through a network. The network may be a broadband network which can transfer data in Mbps to smoothly provide data. In particular, in an access network for connection to a core network, various transfer media such as an optical fiber, a coaxial cable, a spiral pair cable (a telephone line), or a satellite. The server device 200 and the client devices 100-1 to 100-n may perform communication with each other through various wireless networks such as WIFI, Zigbee, or Bluetooth.

One server device 200 is illustrated in FIG. 1, but the server device 200 may be implemented in a form including at least one device, such as at least one content server in which various pieces of content have been stored, a network management system configured to manage VoD service, or network equipment configured to relay content transmission.

In response to a request for content transmission being received from the client devices 100-1 to 100-n, the server device 200 may provide a content server address in which the requested content is stored to a corresponding client device 100-1 to 100-n, and allow the corresponding client device 100-1 to 100-n to download the content from the content server address. Alternatively, the server device 200 may directly provide the content to the client devices 100-1 to 100-n.

Hereinafter, a case where a first client device 100-1, which is one of the client devices 100-1 to 100-n, requests content will be exemplarily described. In response to the content being requested, the server device 200 may transmit data of the requested content in a plurality of different types. For example, the server device 200 may transmit first type data for sequential frames and second type data for non-sequential frames according to a playback time of the content. The frames included in the second type data may be portions of total frames of the content, that is, partial frames of the content. That is, the partial frames mean at least one video frame sampled in a preset order from among the total frames constituting the content.

Video frames of the content themselves may be used as the partial frames. Further, frames converted to a resolution lower than original resolution of the content may be used as the partial frames. The server device 200 transmits the first type data to the first client device 100-1 separately from the partial frames or second type data. Here, the first type data may be the content itself.

The client device requesting the VoD service stores the first type data and the second type data. The first type data and the second type data may be stored in different storage units in the client device. For example, the first type data may be temporarily stored in a buffer for content playback, and the second type data may be stored in a flash memory, a hard disc, a universal serial bus (USB) memory, or the like.

The client device may provide various pieces or types of service using the second type data according to a user command while the client device plays back the content using the first type data.

Hereinafter, a case where the first type data and the second type data are partial frames and content respectively will be exemplarily described.

The server device 200 may first transmit the partial frames, and then transmit the content. However, this is not limited thereto in embodiments of the invention. For example, in response to a multisession being coupled between the server device 200 and the first client device 100-1, the server device 200 may transmit the partial frames and the content in parallel.

The first client device 100-1 autonomously stores the partial frames provided from the server device 200. Further, in response to the content being transmitted, the first client device 100-1 processes the transmitted content, and plays back the processed content. The first client device 100-1 may store the received content in a buffer, sequentially perform various signal processing operations, such as parsing, decoding, or rendering, and play back the content. A parsing module, a decoder, or the like may be variously used according to an encoding method of the content. For example, moving picture experts group (MPEG) may be used.

Under the condition, in response to a skip command being input by the user, the first client device 100-1 performs a skip operation using a partial frame at a point of time corresponding to the skip command among the stored partial frames. The skip operation is an operation which skips a certain portion of content for an arbitrary time while the content is played back, and then performs playback on the content after the skipped portion of the content.

For example, in response to a skip command for jumping to a point of time after 30 minutes from a current time point being input, the first client device 100-1 searches for a frame at a point of time when 30 minutes have elapsed from the current time among the stored partial frames. The first client device 100-1 preferentially outputs the searched or found frame, and at the same time, the first client device 100-1 performs preparation for output of next frames. Specifically, in response to an n1 frame among the partial frames being searched for, the first client device 100-1 requests transmission of data for subsequent frames from an n2 frame, which is a next frame to the searched or found n1 frame to the server device 200. The first client device 100-1 receives the data for the subsequent frames from the n2 frame from the server device 200, processes the data for the subsequent frames, and then immediately outputs the processed subsequent frames just subsequent to the n1 frame. In response to the n1 frame, the n2 frame, and an n3 frame being included in the partial frames, the first client device 100-1 may request the transmission of subsequent frames from an n4 frame to the server device 200, and process the transmitted subsequent frames from the n4 frame. In response to the partial frames being used, the client device may rapidly react to the user's skip command. Therefore, the user does not particularly feel or experience time delay, and it is possible to improve user satisfaction.

In some exemplary embodiments, the server device 200 may collectively provide partial frames for the whole content, and then provide the content. Alternatively, the server device 200 may first provide partial frames for a portion of content and the portion of the content, and then sequentially provide partial frames for next portion of the content and the next portion of the content. Further, in addition to the skip function, the partial frames may be used to a rewind function, a fast forward function, or the like. The client devices 100-1 to 100- n may provide preview images at points of time using the partial frames. The above-described functions will be described later in detail.

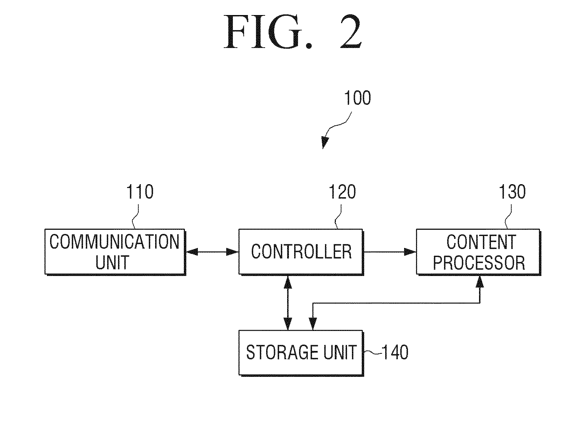

FIG. 2 is a block diagram illustrating a configuration of a client device according to an exemplary embodiment. Referring to FIG. 2, a client device 100 includes a communication unit 110, a controller 120, a content processor 130, and a storage unit 140. As described above, the client device 100 may be implanted with various devices such as a set top box or a TV. Further, the client device 100 may be implemented with a system on chip (SoC), which may be mounted on various devices, or an independent module. FIG. 2 illustrates that the client device 100 is implemented with a device, in which a separate display is not included, for reference.

The communication unit 110 is configured to perform communication with the server device 200. For example, the communication unit 110 may be implemented with a network interface which is connected to a network through a transmission medium, such as a telephone line or an optical cable, but the communication unit 110 is not limited thereto in embodiments of the invention. The communication unit 110 may be implemented in a form including various wireless communication modules, such as a WIFI module configured to perform WIFI communication, or a Bluetooth module configured to perform Bluetooth communication.

The controller 120 is configured to control an overall operation of the client device 100. For example, the controller 120 requests content from the server device 200 through the communication unit 110 in response to the content being selected. The user may select content to be watched using a button included in a main body of the client device or an external remote controller.

The content processor 130 is configured to process content received through the communication unit 110 and output the processed content. The content processor 130 may include various signal processing modules such as a parser, a demultiplexer, a decoder, a frame rate conversion module, a noise removal filter, or a deinterleaver. The content processor 130 may convert content into a video frame and an audio signal, and provide the converted video frame and audio signal to an external display device coupled through an interface. The external display device may be a TV.

The storage unit 140 is configured to store various programs and data required for an operation of the client device. The storage unit 140 may store an operating system and various applications as well as partial frames for content. For example, the storage unit 140 may be implemented with various types of memories such as a hard disc, a flash memory, an external USB memory, a solid state drive (SSD), or a security digital (SD) card.

Under this condition, in response to the skip command being input, the controller 120 may control the content processor 130 to immediately output a frame at a point of time corresponding to the skip command using the second type data.

That is, the controller 120 may control the content processor 130 to hop to the frame at the point of time corresponding to the skip command among the partial frames which are the second type data, and output the frame at the point of time corresponding to the skip command.

Specifically, the controller 120 searches for the frame at the point of time corresponding to the skip command among the stored partial frames. In response to one frame being searched for or found, the controller 120 requests transmission for subsequent frames of the searched frame to the server device. In response to the subsequent frames being received while the searched frame is output, the controller 120 controls the content processor 130 to output the subsequent frames just subsequent to the searched frame.

FIG. 2 illustrates only the storage unit 140, but the client device 100 may further include a storage unit, such as a buffer, configured to store content to be immediately played back, that is, the first type data as described above. The buffer may be provided in the content processor 130 or provided as a separate configuration element. In some cases, the storage unit 140 configured to store the second type data may be referred to as a first storage unit, and the storage unit configured to store the first type data may be referred to as a second storage unit, Illustration of the first and second storage units will be omitted in FIG. 2.

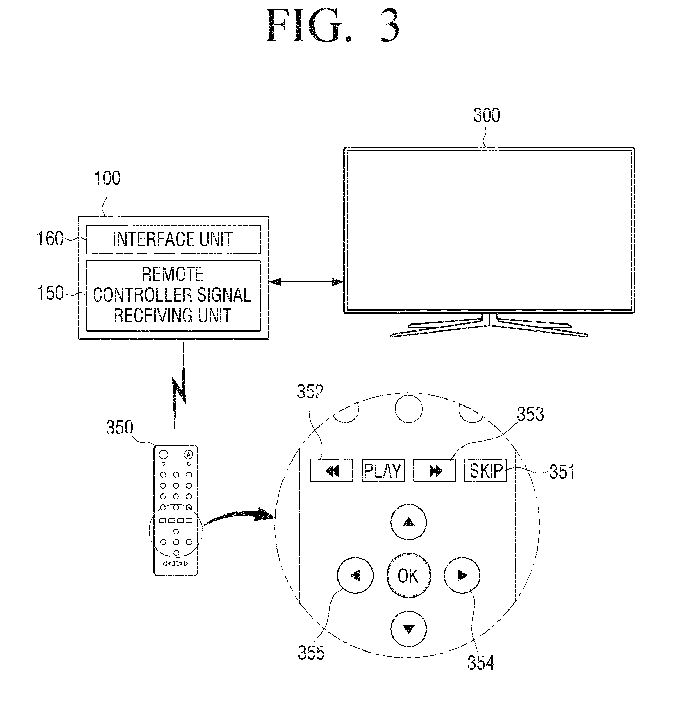

FIG. 3 illustrates that the client device 100 is implemented with a set top box. As illustrated in FIG. 3, the client device 100 may further include a remote controller signal receiving unit 150 and an interface unit 160.

The remote controller signal receiving unit 150 is configured to receive a remote controller signal output from a remote controller 350. The remote controller 350 may transmit the remote controller signal in a form of an infrared (IR) signal, a Bluetooth communication packet, or the like according to the kind of the remote controller 350.

As illustrated in FIG. 3, various buttons 351, 352, 353, 354, and 355 may be provided in the remote controller 350. The button 351 having a skip function may be included among the various buttons. In response to the corresponding button 351 being selected, the remote controller 350 may transmit the remote controller signal including a remote controller code corresponding to the skip command. The controller 120 may check that the skip command is input through the remote controller signal receiving unit 150. The point of skip time may be differently changed according to the selection number of the button 351, a selection time of the button 351, or the like. For example, in response to the skip time being set to 1 minute units whenever the skip button is selected once, the controller 120 may recognize to skip to a point of time after 3 minutes in response to the button 351 being selected three times. For example, in response to the skip time being set in 1 minute units whenever the skip button is selected for 1 second, the controller 120 may recognize to skip to a point of time after 3 minutes in response to the button 351 being pushed for three seconds.

The interface unit 160 is configured to provide an output screen output from the content processor 130 to an external display device 300. The external display device 300 displays the output screen provided through the interface unit 160. In response to the skip command being input as described above, the output screen from a point of skipped time is displayed.

As described above, the client device 100 may be implemented with a display device such as a TV.

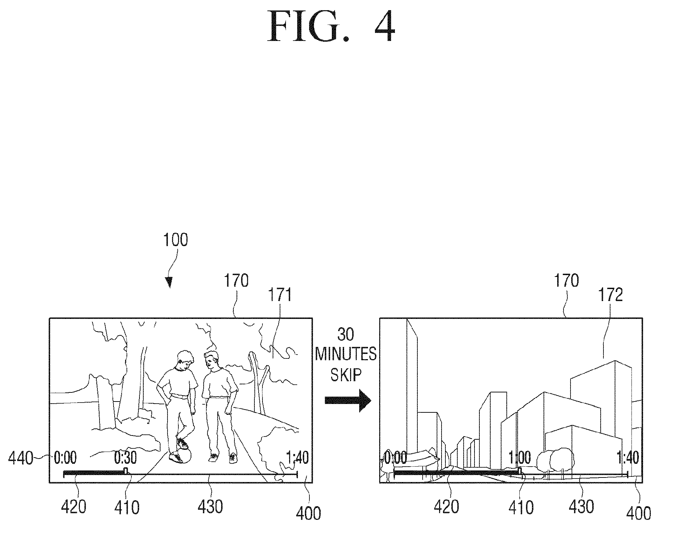

FIG. 4 illustrates that the client device 100 is implemented with a TV. In some exemplary embodiments, as illustrated in FIG. 4, the client device 100 may further include a display unit 170 configured to display the output screen output from the content processor 130. Although not shown in FIG. 4, the remote controller signal receiving unit 150 described in FIG. 3 may be included in the client device 100 together with the display unit 170.

In response to the skip command being input, the controller 120 may display a bar graph 400 indicating a degree of playback on the output screen. An indicator 410 indicating a point of current playback time may be represented in the bar graph 400. Further, a previously played portion 420 of the bar graph 400 is differently represented from a non-played portion 430 of the bar graph 400 on the basis of the location of the indicator 410. Time information 440 indicating a point of playback time may be also represented in one side of the bar graph 400.

FIG. 4 illustrates a case where a skip command for skip after 30 minutes is input under the state in which a frame 171 at 0:30 is displayed. The controller 120 searches for a frame at around 1:00 among stored partial frames, and performs playback on frames from a searched frame 172. Accordingly, the location of the indicator 410 in the bar graph 400 is changed to 1:00, and shapes of the played portion 420 and the non-played portion 430 of the bar graph 400, and the time information 440 are also changed.

Although the case where the skip button 351 is provided in the remote controller 350 is illustrated in FIG. 3, the function for the skip command may be allocated to other buttons existing in the remote controller 350. For example, the function of the skip command may be allocated to direction selection buttons 354 and 355.

In the exemplary embodiment of FIG. 4, in response to the right direction button 354 or the left direction button 355 of the remote controller 350 being selected, the controller 120 displays the bar graph 400 for the skip function. The controller 120 moves the location of the indicator 410 according to operations of the direction selection buttons 354 and 355. For example, in response to the right direction button 354 being pressed several times or for a long time by the user, the controller 120 may gradually move the indicator 410 in the right direction. In response to the button operation being completed, the controller 120 may perform the skip function to a point of moving time of the indicator 410, and perform playback on partial frames from a partial frame of the corresponding point of moving time. In this way, the user may freely input the skip command.

The partial frames may be configured of a plurality of frame groups discontinuously sampled in a period of an arbitrary skip time unit. The skip time unit is the number of frames to be skipped once or a time to be skipped once. Each of the frame groups may include a plurality of continuous or subsequent frames.

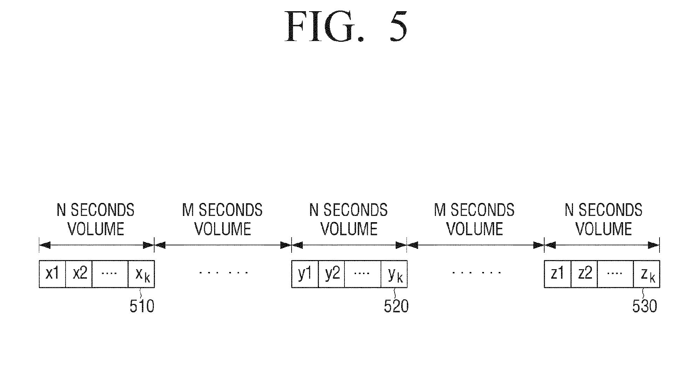

FIG. 5 is a view illustrating a sampling period of partial frames. FIG. 5 illustrates that frames corresponding to a volume of n seconds sampled per m seconds, and the sampled frames are used as the partial frames. Here, the skip time units such as m and n, may be determined through consultation between the server device 200 and the client device 100. Alternatively, a value determined by default by the server device 200 may be used as the skip time unit. It can be seen that each of frame groups 510, 520, and 530 is configured of k frames.

In response to an output frame rate being 60 Hz, 60 frames are output per 1 second. Therefore, in response to the skip command for skip to a point of time after 5 seconds being input in the state in which the user watches a first frame, 300 (60*5) frames have to be skipped. Therefore, the controller 120 may search for a 301st frame among the stored partial frames. While the controller 120 may preferentially display the 301st frame and a 302nd frame among the partial frames, the client device 100 may receive subsequent frames from a 303rd frame from the server device 200 again, and display the received subsequent frames.

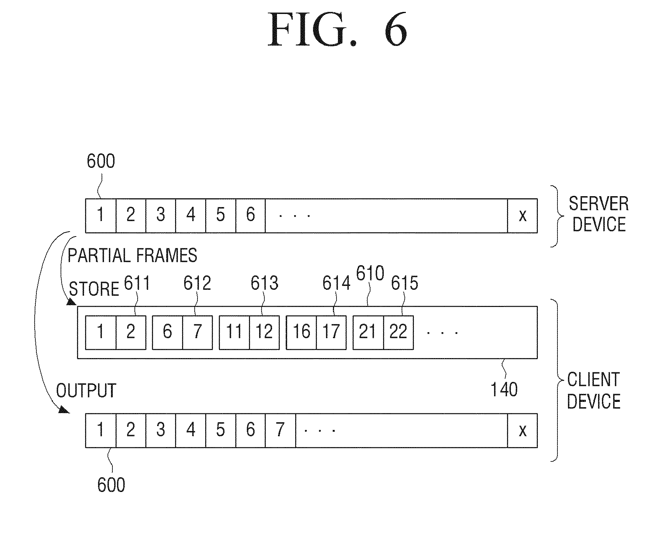

FIG. 6 illustrates an example of partial frames sampled by two in the period of a 5 frame unit. In response to content 600 being configured of a total x frames, the server device 200 may sample frames in order of 1, 2, 6, 7, 11, 12, 16, 17, 21, 22, ... frames among frames of the corresponding content 600. Here, the 1st frame and the 2nd frame, the 6th frame and the 7th frame, the 11th frame and the 12th frame, the 16th frame and the 17th frame, and the 21st frame and the 22nd frame constitute frame groups 611, 612, 613, 614, and 615, respectively. The partial frames are provided to the client device 100, and the client device 100 stores the partial frames. Separately from the partial frames, the total frames of the content 600 sequentially provided to the client device 100, processed through the content processor 130, and then output.

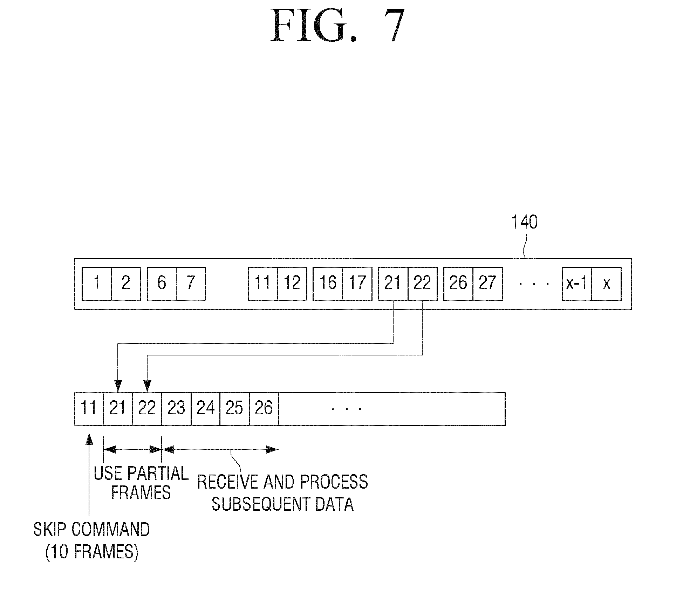

FIG. 7 is a view illustrating an operation in response to the skip command being input in the example of FIG. 6. Referring to FIG. 7, in response to the skip command for skip of 10 frame units or frames being input in the state in which the 11th frame is displayed, the controller 120 searches for a frame located after 10 frames on the basis of the 11th frame, that is, the 21th frame among the partial frames stored in the storage unit 140. While the controller 120 continuously displays the 21st frame and the 22nd frame stored just next to the 21st frame, the controller 120 requests subsequent frames from a 23rd frame to the server device 200, receives the subsequent frames from the 23rd frame from the server device 200, and processes the received subsequent frames.

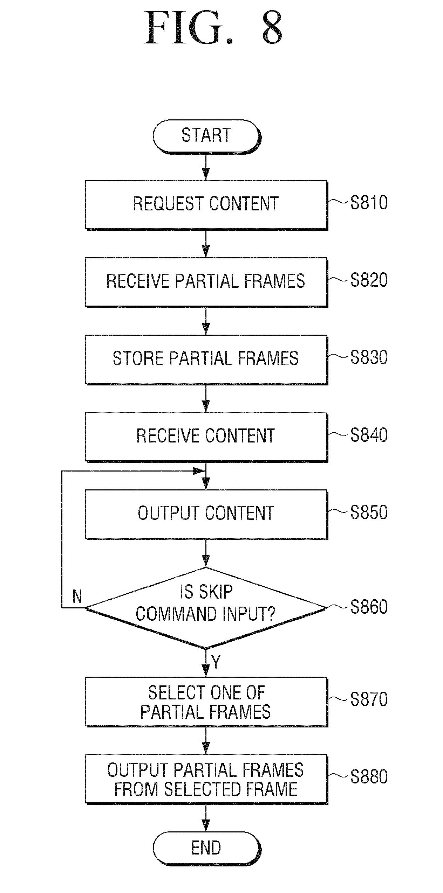

FIG. 8 is a flow chart illustrating a method for providing VoD service of a client device according to an exemplary embodiment. Referring to FIG. 8, the client device 100 requests selected content to the server 200 in response to the content being selected by the user (S810).

The client device 100 may receive partial frames of the corresponding content from the server device 200 (S820). In response to the partial frames being received, the client device 100 stores the received partial frames (S830). Then, the client device 100 receives the content itself (S840), and the client device 100 processes the received content, and outputs the processed content (S850).

FIG. 8 illustrates that the partial frames are first received and stored, and then the content is received. However, in response to the client device 100 and the server device 200 being coupled through a multisession, the partial frames and the content may be received in parallel.

The client device 100 may receive all partial frames for the whole content and store the received partial frames, and then receive the content. However, this is not limited thereto in embodiments of the invention. In other embodiments, the client device 100 may partially receive partial frames according to the degree of playback of content and store the partially received partial frames. For example, in response to content being a volume of total 60 minutes, the client device 100 may first receive only partial frames sampled among frames of first 10 minutes and store the sampled partial frames. Then, in response to playback on the content being performed to a certain degree, the client device 100 may receive partial frames sampled among frames of next 10 minutes and store the partial frames. In this way, the partial frames may be received step by step.

In response to a skip command being input in the state in which the partial frames are stored (S860), the client device 100 selects a frame corresponding to the skip command among the partial frames (S870), and outputs the partial frames from the selected frame (S880).

As described above, the client devices according to the various exemplary embodiments may apply the partial frames to various functions.

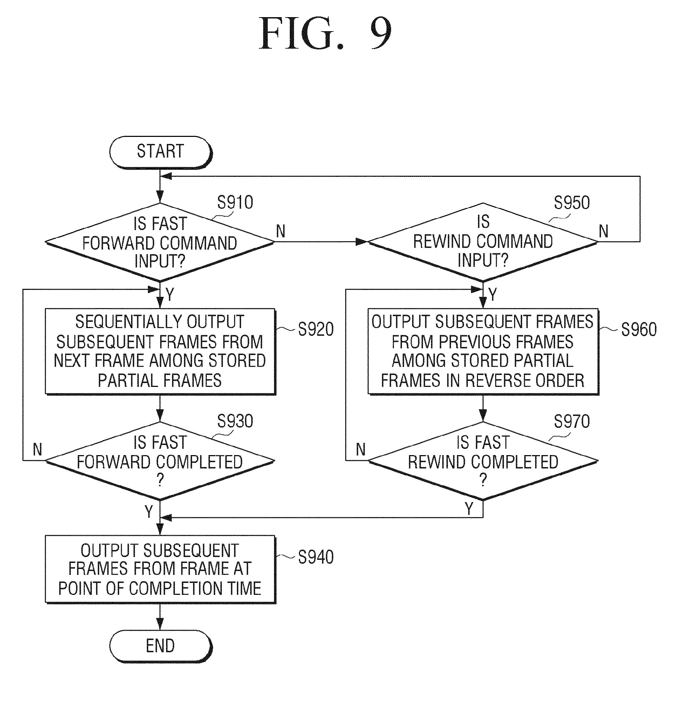

FIG. 9 is a flow chart illustrating a method for providing VoD service according to another exemplary embodiment. Referring to FIG. 9, in response to a fast forward command being input (S910), the controller 120 of the client device 100 may sequentially output subsequent frames from next frame of a current frame among stored partial frames (S920). In response to the fast forward operation being completed (S930), the client device 100 may output partial frames corresponding to a point of completion time, and simultaneously the client device 100 may receive subsequent frames next to the partial frames from the server device 200 and output the received subsequent frames (S940).

In response to a rewind command being input (S950), the controller 120 may output partial frames from a previous frame of a current frame corresponding to the rewind command among the stored partial frames in reverse order (S960). In response to the rewind operation being completed (S970), the controller 120 starts to output subsequent frames from a frame at a point of completion time (S940).

In response to the fast forward operation and the rewind operation being performed using the partial frames, the stored partial frames are immediately used to perform the fast forward operation and the rewind operation without receiving of the subsequent frames one by one, and thus burden of buffering or the like may be reduced.

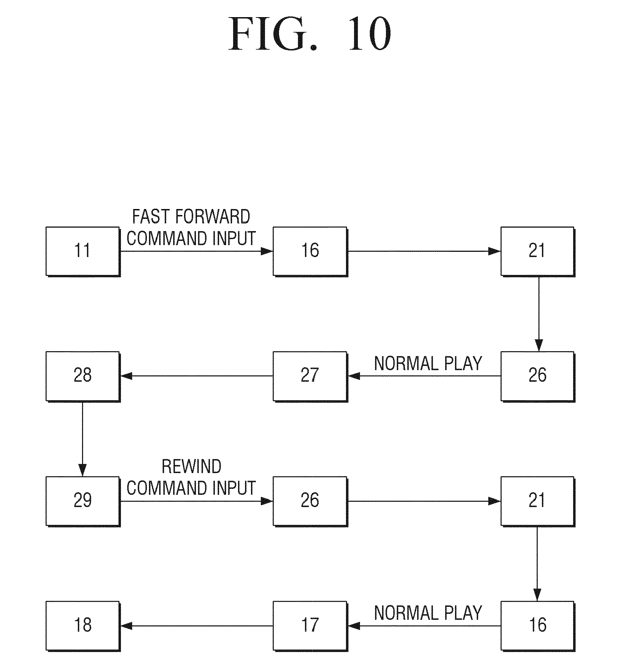

FIG. 10 is a view illustrating a fast forward operation and a rewind operation using partial frames, for example, the partial frames of FIG. 7. Referring to FIG. 10, for example, in response to a fast forward command being input while the user watches the 11th frame, the controller 120 may sequentially display 16th, 21st, and 26th frames. In this way, the controller 120 may perform fast forward only using partial frames at certain intervals without use of all the subsequent frames next to the 11th frame among the stored partial frames. FIG. 10 illustrates that the fast forward operation is performed at 5 frame intervals. In response to a speed of the fast forward being increased from 2x to 4x, the controller 120 may sequentially display 21st, 31st, and 41st frames subsequent to the 11th frame.

In response to a normal play command being input in the state in which the 26th frame is displayed through the fast forward operation, the controller 120 outputs subsequent frames from a 27th frame which is next frame of the 26th frame again. In response to a rewind command being input in the state in which a 29th frame is displayed through the normal play operation, the controller 120 selectively output frames from the 26th frame, which is a partial frame just before the 29th frame, among the stored partial frame in 5 frame units. That is, the controller 120 may display the 26th, 21st, and 16th frames in order. In response to a normal play command being input again in the state in which the 16th frame is displayed, the controller 120 outputs frames from the 17th frame which is a next frame of the 16th frame again.

FIG. 10 illustrates that the fast forward operation and the rewind operation are performed not using all the stored partial frames but selectively using the partial frames in certain frame units, but this is not limited thereto in embodiments of the invention. That is, in response to the fast forward operation and the rewind operation being performed, all next frames or all previous frames of a frame corresponding to the fast forward command or the rewind command among the stored partial frames may be sequentially displayed. For example, in response to the rewind command being input in the state that the 26th frame is output, the controller 120 may sequentially display the 22rd, 21st, 17th, 16th, 12th, 11th, 7th, 6th, 2rd, and 1st frames among the stored partial frames in order.

According to the other exemplary embodiments, the client device 100 may use the partial frames to preview the video.

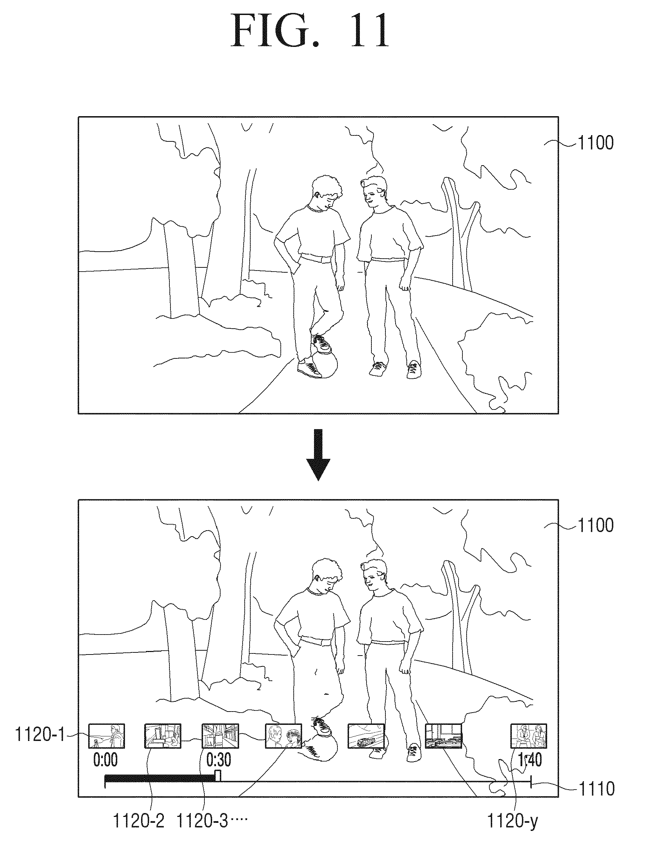

FIG. 11 is a view explaining a method for providing a preview service using partial frames. As illustrated in FIG. 11, in response to a preview command being input in the state in which an output screen 1100 of content is displayed, the controller 120 may display a bar graph 1110 indicating the degree of playback of the content. In some exemplary embodiments, the controller 120 may display the bar graph 1110 in various cases such as touching or approaching of the display unit 170, elapse of a certain time after the start of playback of content, or arrival of a preset time period.

The controller 120 may sequentially display preview images 1120-1 to 1120-y for partial frames in chronological order on one side of the bar graph 1110. In response to one preview image being selected by the user through a remote controller or a touch screen, the controller 120 may hop to a frame at point of time corresponding to the selected preview image, and immediately play back the frame.

The method for providing preview service illustrated in FIG. 11 may be equally applied to an embodiment in which the client device 100 includes the display unit 170 therein or an embodiment in which the client device 100 is implemented with a set top box. In the above-described embodiments, the controller 120 may control the content processor 130 to form an output screen on which the bar graph overlaps, and provide the output screen to the external display device 300.

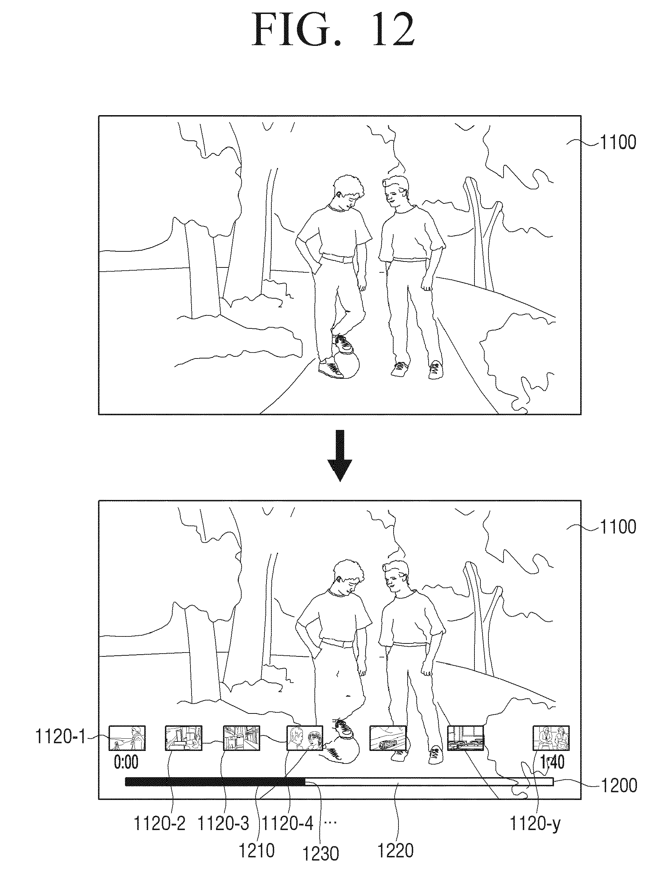

The bar graph may be implemented in various forms. FIG. 12 is a view illustrating a method for providing preview service according to another exemplary embodiment.

Referring to FIG. 12, a bar graph 1200 may be represented in a box shape. A playback-completed portion 1210 and a non-playback portion 1220 of the bar graph 1200 may be represented with different colors on the basis of a boundary line 1230. The user may intuitively recognize the degree of playback according to a location of the boundary line 1230.

Preview images 1120-1 to 1120-y may be displayed in one side of the bar graph 1200. In response to one preview image being selected by the user using a remote controller or a touch screen, hopping to a point of time corresponding to the selected preview image may be immediately performed.

In other exemplary embodiments, in response to the boundary line 1230 being touched and dragged by the user, the controller 120 may display a corresponding preview image on one side of a dragging point. Then, in response to the touch state being released by the user, the playback starts from the preview image finally displayed. In this way, the second type data may be applied to various pieces of service.

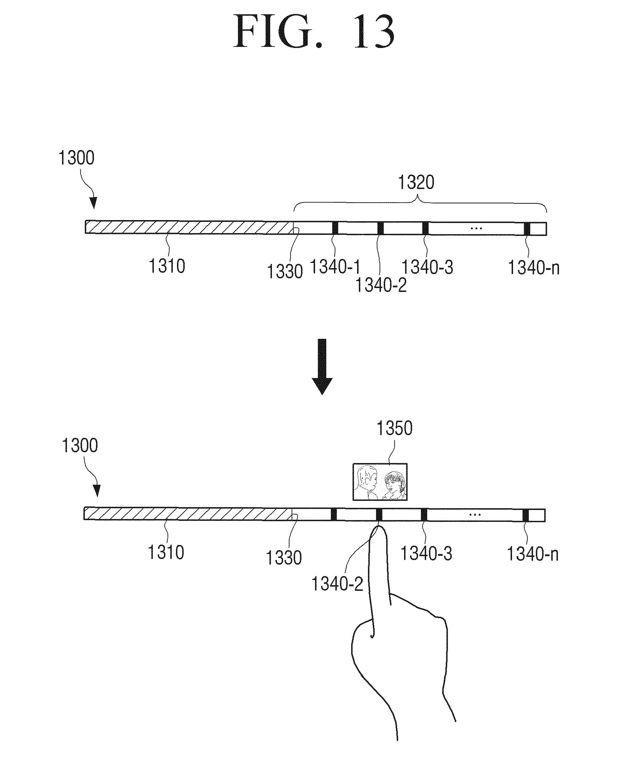

FIG. 13 is a view illustrating a configuration of a bar graph according to another exemplary embodiment. Referring to FIG. 13, a playback-completed portion 1310 and a non-playback portion 1320 of a bar graph 1300 may be represented with different colors on the basis of a boundary line 1330. Hoppable points 1340-1 to 1340-n in the non-playback portion 1320 of the bar graph 1300 may be differently represented from a periphery. That is, a color, a shape, a size, or the like at a point of time when the partial frames exist in the non-playback portion 1320 of the bar graph 1300 may be differently represented from the periphery. FIG. 13 illustrates that the hoppable points 1340-1 to 1340-n are represented with different colors from the periphery. The user may recognize the hoppable points 1340-1 to 1340-n with the naked eye, and easily understand the points of the hoppable time.

In response to one hoppable point (for example, 1340-2) being touched by the user, or in response to an input unit such as a finger or a pen being approaching the hoppable point by the user, the controller 120 may display a preview image 1350 corresponding to a touching or approaching point around the bar graph. In response to the preview image 1350 being touched by the user, the controller 120 may hop to the point of time corresponding to the preview image 1350 and starts the playback at the point of time.

Although the case where one preview image is displayed with respect to the point selected by the user has been illustrated and described, but this is not limited thereto in embodiments of the invention. For example, the preview images corresponding to the points 1340-1 to 1340-n are simultaneously displayed as illustrated in FIG. 12.

In addition, the partial frames may be applied to configure various user interfaces (UIs).

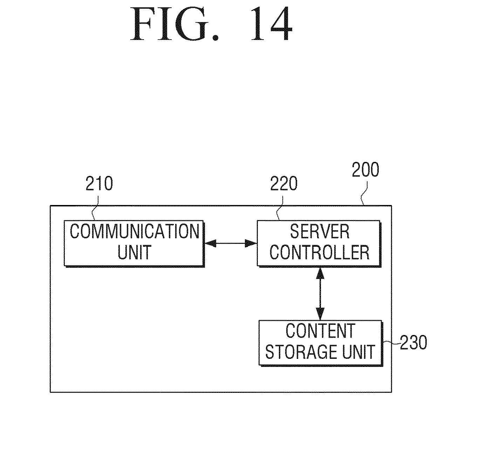

FIG. 14 is a block diagram illustrating a configuration of a server device according to an exemplary embodiment. Referring to FIG. 14, the server device 200 includes a communication unit 210, a server controller 220, and a content storage unit 230.

The content storage unit 230 is configured to store a plurality of pieces of content. Although FIG. 14 illustrates that the content storage unit 230 is an internal configuration element of the server device 200, the content storage unit 230 may be implemented with at least one external server. For example, a server of a content manufacturer which manufactures content may communicate with a server of a service provider configured to provide VoD service, and provide the content. Hereinafter, the servers are collectively called one server device.

The communication unit 210 is configured to perform communication with various client devices. The communication unit 210 may receive a content transmission request from a VoD client device.

The server controller 220 is configured to provide VoD service to client devices accessed through the communication unit 210.

For example, in response to a client device being accessed, the server controller 220 transmits a website screen including information for providable content to the client device 100 through the communication unit 210. The client device 100 may display the website screen on the display unit 70 therein or the external display device 300. The user may select content to be downloaded from the website screen. The client device 100 transmits the information for the selected content to the server device 200.

In other exemplary embodiments, the server controller 220 may provide thumbnail images, text information, or the like for various pieces of providable content to the client device. The client device may generate a content selection UI and display the generated content selection UI using a VoD management program provided therein. In response to content being selected by the user through the content selection UI, the client device 100 may transmit information for the selected content to the server device 200.

In response to the content transmission request being input through the communication unit 210, the server controller 220 may transmit different types of data. Specifically, the server controller 220 may transmit first type data for sequential frames and second type data for non-sequential frames according to a playback time of the content. As described above, the first type data may be content itself selected by the content transmission request, and the second type data may be data including partial frames sampled in preset order among total frames of the content. The server controller 220 transmits the first type data and the second type data to the client device through the communication unit 210.

The partial frames may be previously generated and stored in the content storage unit 230. Alternatively, in response to the content transmission request being input, the server controller 220 may detect partial frames from corresponding content, and provide the detected partial frames. A sampling period of the partial frames may be set according to a default value stored in the server device 200, or according to information for a skip time unit received from the client device 100.

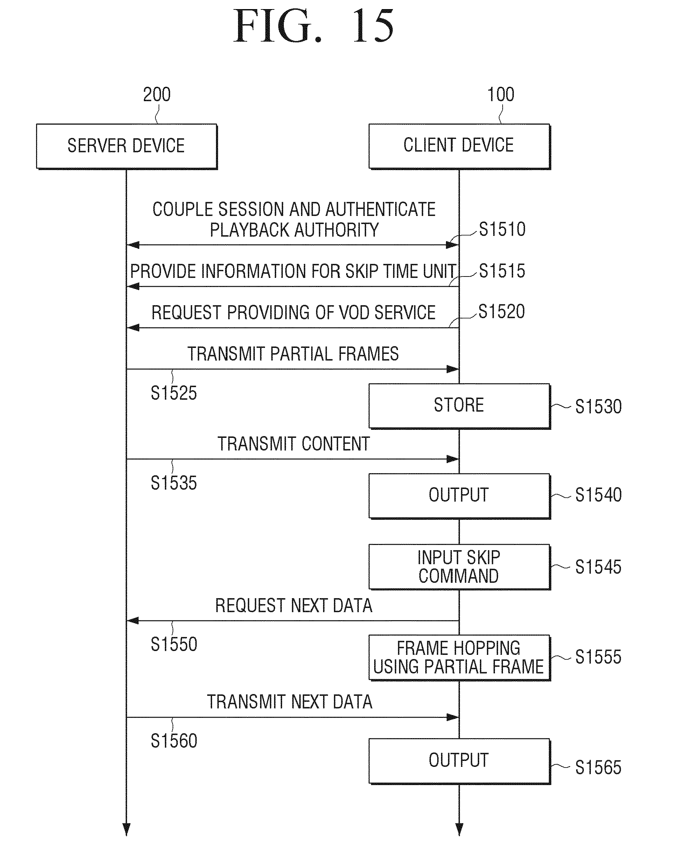

FIG. 15 is a timing chart illustrating operations of the server device 200 and the client device 100. Referring to FIG. 15, the server device 200 and the client device 100 may couple a communication session. The client device 100 may transmit pre-registered user identification (ID) and password. In response to the normally registered user ID and password being transmitted, the server device 200 may authenticate playback authority of the corresponding client device 100 (S₁₅₁₀).

The client device 100 may transmit information for a skip time unit to the server device 200 (S₁₅₁₅). Specifically, the client device 100 displays a UI configured to input the information for the skip time unit. In response to the information for the skip time unit being written into the UI by the user, the client device 100 may transmit the written information to the server device 200. As illustrated in FIG. 5, the user may directly select m seconds and n seconds. In exemplary embodiments, the information for the skip time information may not be separately set, and the preset default value itself may be used as the information for skip time unit.

In response to one piece of content being selected in the state in which the information for the skip time unit is provided, the client device 100 transmits the transmission request for the selected content to the server device 200 (S₁₅₂₀). The server device 200 may transmit a plurality of different types of data in response to the transmission request. For example, the server device 200 transmits partial frames and content as described above (S₁₅₂₅, S₁₅₃₅). The client device 100 stores the received partial frames (S₁₅₃₀), and processes the received content and outputs the processed content (S₁₅₄₀). Further, the client device 100 may store the received content in a buffer or other storage units.

In response to a skip command being input in the state in which the content is output (S₁₅₄₅), the client device 100 requests transmission for next data on the basis of a point of time corresponding to the skip command (S₁₅₅₀), and displays a frame at the point of time corresponding to the skip command using second type data (S₁₅₅₅). That is, the client device 100 hops to the frame corresponding to the point of time corresponding to the skip command among the partial frames of the second type data and outputs the frame. In response to the next data being transmitted while the partial frames are output (S₁₅₆₀), the client device 100 outputs pieces of next data subsequent to the partial frames.

Even when the skip function is performed, content may be played back without separate buffering.

The method for providing VoD service, the method of performing skip, and the like according to the above-described various exemplary embodiments may be coded in software and stored in a non-transitory readable medium. The non-transitory readable medium may be mounted on various devices and used.

As an example, the non-transitory recordable medium, in which a program code for performing the operations of requesting content to a server device in response to the content being selected, receiving partial frames sampled in preset order among total frames of the content from the server device and storing the received partial frames, receiving the content from the server device and outputting the received content, and performing a skip operation for hopping to a frame at a point of time corresponding to a skip command among the partial frames in response to the skip command being input and outputting the frame is stored, may be mounted on an image forming apparatus.

The non-transitory recordable medium is not a medium configured to temporarily store data such as a register, a cache, or a memory but an apparatus-readable medium configured to semi-permanently store data. Specifically, the non-transitory apparatus-readable medium may include a compact disc (CD), a digital versatile disc (DVD), a hard disc, a Blu-ray disc, a USB, a memory card, or a read only memory (ROM) and the appropriate processor or computers to perform the operations discussed herein.

The foregoing exemplary embodiments and advantages are merely exemplary and are not to be construed as limiting the present inventive concept. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. A method for providing video on demand, VoD, service to a client device, the method comprising:
requesting content from a server device in response to the content being selected;
receiving, from the server device, first type data for sequential frames and second type data for non-sequential frames according to a playback time of the content;
outputting the content to the client device using the first type data; and
performing a skip operation for displaying on the client device a frame at a point of time corresponding to a skip command using the second type data in response to the skip command being input.

2. The method as claimed in claim 1, wherein the second type data includes data for partial frames sampled in a preset order among total frames of the content, and
the performing of the skip operation includes hopping to the frame at the point of time corresponding to the skip command among the partial frames and displaying the frame in response to the skip command being input.

3. The method as claimed in claim 2, wherein the performing of the skip operation includes:
searching for the frame at the point of time corresponding to the skip command among the partial frames;
requesting transmission of subsequent frames to a searched frame to the server device; and
receiving the subsequent frames from the server device while the searched frame is output, and outputting the subsequent frames subsequent to the searched frame.

4. The method as claimed in claim 3, further comprising:
notifying the server device of information for a skip time unit, and
wherein the partial frames include a plurality of frame groups discontinuously sampled in a period of the skip time unit, and each of the frame groups includes a plurality of continuous frames.

5. The method as claimed in any one of claims 2 to 4, further comprising:
sequentially outputting next frames of a current frame among the partial frames in response to a fast forward command being input; and
sequentially outputting previous frames of the current frame among the partial frames in a reverse order in response to a rewind command being input.

6. The method as claimed in any one of claims 2 to 5, further comprising:
displaying a bar graph indicating a degree of playback on an output screen of the content; and
sequentially displaying preview images for the partial frames on one side of the bar graph in chronological order.

7. The method as claimed in any one of claims 2 to 6, wherein the client device and the server device are coupled through a multisession, and
the partial frames and the content are received in parallel through the multisession.

8. The method as claimed in any one of claims 2 to 7, wherein the partial frames are received in preset number units step by step according to a degree of output processing of the content.

9. The method as claimed in any one of claims 2 to 8, wherein the partial frames are frames converted into a lower resolution than original frames of the content.

10. A client device, comprising:
a communication unit configured to perform communication with a server device;
a controller configured to request content from the server device through the communication unit in response to the content being selected;
a content processor configured to process the content and output the processed content in response to the content being received from the server device; and
a storage unit configured to store partial frames sampled in a preset order among total frames of the content in response to the partial frames being received from the server device,
wherein the controller controls the content processor to output a frame at a point of time corresponding to a skip command among the partial frames in response to the skip command being input.

11. The client device as claimed in claim 10, wherein the controller is arranged to search for the frame at the point of time corresponding to the skip command among the partial frames, to request transmission of subsequent frames to a searched frame from the server device, and to control the content processor to output the subsequent frames subsequent to the searched frame in response to the subsequent frames being received while the searched frame is output.

12. The client device as claimed in claim 11, wherein the controller is arranged to notify the server device of information for a preset skip time unit, and
the partial frames are configured of a plurality of frame groups discontinuously sampled in a period of the skip time unit, and each of the frame groups includes a plurality of continuous frames.

13. The client device as claimed in claim 11 or 12, wherein the controller is arranged to control the content processor to sequentially output next frames of a current frame among the partial frames in response to a fast forward command being input, and to sequentially output previous frames of the current frame among the partial frames in reverse order in response to a rewind command being input.

14. The client device as claimed in any one of claims 11 to 13, further comprising a display unit configured to display an output screen of the content,
wherein the controller is arranged to display a bar graph indicating a degree of playback on the output screen of the content, and sequentially displays preview images for the partial frames on one side of the bar graph in chronological order.

15. The client device as claimed in any one of claims 11 to 14, further comprising an interface unit configured to transmit an output screen output from the content processor to an external display device,
wherein the controller is arranged to display a bar graph indicating a degree of playback on the output screen of the content, and sequentially displays preview images for the partial frames on one side of the bar graph in chronological order.
